(19) Europäisches Patentamt
European Patent Office
Office européen des brevets

(11) **EP 3 540 824 B1**

(12) **EUROPEAN PATENT SPECIFICATION**

(45) Date of publication and mention
of the grant of the patent:
**31.05.2023 Bulletin 2023/22**

(21) Application number: **17877946.8**

(22) Date of filing: **14.07.2017**

(51) International Patent Classification (IPC):
***H01M 10/0525*** (2010.01)   ***H01M 10/0567*** (2010.01)

(52) Cooperative Patent Classification (CPC):
**H01M 10/0525; H01M 4/525; H01M 10/0567;
H01M 10/0569; H01M 50/609;** H01M 2300/0028;
Y02E 60/10

(86) International application number:
**PCT/CN2017/093004**

(87) International publication number:
**WO 2018/103335 (14.06.2018 Gazette 2018/24)**

(54) **SECONDARY BATTERY AND METHOD FOR ELECTROLYTE INJECTION**

SEKUNDÄRBATTERIE UND VERFAHREN ZUR ELEKTROLYTINJEKTION

BATTERIE SECONDAIRE ET PROCÉDÉ D'INJECTION D'ÉLECTROLYTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.12.2016 CN 201611122843**

(43) Date of publication of application:
**18.09.2019 Bulletin 2019/38**

(73) Proprietor: **Contemporary Amperex Technology
Co., Limited
Ningde City, Fujian 352100 (CN)**

(72) Inventors:
• **ZHANG, Cui
Ningde
Fujian 352100 (CN)**
• **JU, Feng
Ningde
Fujian 352100 (CN)**
• **ZHOU, Xiaochong
Ningde
Fujian 352100 (CN)**
• **ZHANG, Ming
Ningde
Fujian 352100 (CN)**
• **HAN, Changlong
Ningde
Fujian 352100 (CN)**

(74) Representative: **Rösler Rasch van der Heide &
Partner
Bodenseestraße 18
81241 München (DE)**

(56) References cited:
CN-A- 101 465 444    CN-A- 102 201 563
CN-A- 102 569 900    CN-A- 102 637 903
CN-A- 102 694 201    CN-A- 103 268 956
CN-A- 103 682 454    CN-A- 104 332 650
CN-A- 104 659 408    CN-A- 105 789 700
CN-A- 106 159 345    CN-A- 106 784 589

**Description**

**TECHNICAL FIELD**

The present disclosure relates to the field of batteries, and specifically, to a secondary battery and a method for electrolytic solution injection.

**BACKGROUND**

Compared with lead-acid batteries, nickel-hydrogen batteries, nickel-cadmium batteries, etc., lithium-ion batteries have advantages such as high operating voltage, high specific energy, low self-discharge, long cycle life, no memory effect, environmental friendliness, safety, and the like. Nowadays, the lithium ion batteries have quickly occupied the consumer electronics market and have rapidly expanded in the applications in the power storage field. With the increasing consumers' requirements on lightness and durability of electronic products and the applications of lithium-ion battery in new fields such as electric vehicles, hybrid electric vehicles, large-scale energy storage power stations and mobile energy storage equipment, it is urgent to improve energy density and safety performance of the lithium ion batteries.

A positive electrode, as an important component of a lithium ion battery, is a main source of $Li^+$ inside the battery, and is an important part for providing an electron carrier for the battery. Current ternary materials have become a research focus due to their high energy density and safety performance. In the battery using a ternary material as the positive electrode material, especially a battery cell with the "three high properties" (high nickel content, high coating weight, high compaction density) having a high energy density, a significant oxidative decomposition of the conventional electrolytic solution occurs under the high voltage at the interface of the positive electrode material, the catalytic effect of the transition metal atoms in the positive electrode material, and the surface effect during operating, thereby resulting in a severe gas production during high temperature storage. In order to suppress the oxidation gas production of the electrolytic solution at the positive electrode interface, the mainstream approach at present is to add a film-forming additive into the electrolytic solution. The conventional additives in the high-nickel system, such as propylene sulfite (PS) and 1,3-propene sultone (PES), can effectively form a film to stabilize the positive electrode interface, but greatly increases the interface impedance of the negative electrode at the same time, thereby leading to an increase in the impedance of the whole battery cell and a severe deterioration of dynamic properties such as cycle performance. Therefore, an important research direction is how to suppress the high-temperature performance deterioration caused by reaction between the electrolytic solution and the positive electrode in the process of preparing a high-nickel lithium-ion battery while maintaining the interface dynamic performance of the negative electrode.

In view of the above, the present disclosure is provided.

**SUMMARY**

The object of the present disclosure is to provide a method for electrolytic solution injection of the secondary battery.

The technical solutions for achieving the objects of the present disclosure are described as follows. The invention is defined by the appended claims.

The technical solutions of the present disclosure has at least the following beneficial effects:

In the secondary battery of the present disclosure, the high temperature performance and the dynamic performance of a high-nickel secondary battery are balanced. The electrolytic solution of the present disclosure is composed of the electrolytic solution S1 of the first injection and the electrolytic solution S2 of the second injection, and positive and negative film-forming additives are introduced successively and separately during the two injections. Firstly, the negative electrode film-forming additive is added through the first injection, and a solid electrolyte interphase (SEI) film is formed on the surface of the graphite through a formation process. The solid electrolyte interphase film effectively isolates the negative electrode material from the electrolytic solution and thus prevents side reactions caused by a direct contact. Subsequently, the positive electrode film-forming additive is added through the second injection, and then a fine cathode electrolyte interphase (CEI) film is formed during a first high-voltage charging of the battery cell and testing of the nominal capacity, thereby inactivating surface active sites of the high-nickel material. Due to the protective effect of the SEI film, an interface interaction between the positive electrode film-forming additive and the negative electrode is avoided, while the interface of the positive and negative electrodes is modified, thereby balancing the high temperature performance and cycle performance of the high nickel lithium ion battery.

Moreover, the method for electrolytic solution injection of the present disclosure is simple and can be implemented easily by the existing method with an additional second electrolytic solution injection process.

## DESCRIPTION OF EMBODIMENTS

The present disclosure is further described below in conjunction with specific embodiments. It is to be understood that the embodiments are not intended to limit the scope of the application.

The present disclosure relates to a secondary battery including a positive electrode plate, a negative electrode plate, a separator and an electrolytic solution. A positive electrode active material of the positive electrode plate includes a high-nickel ternary positive electrode material. The electrolytic solution includes a solvent, an electrolyte salt and a film-forming additive, and the electrolytic solution is composed of an electrolytic solution S1 injected into the secondary battery in a first injection and an electrolytic solution S2 injected into the secondary battery in a second injection. A film-forming additive in the electrolytic solution S1 is a negative electrode film-forming additive, and a film-forming additive in the electrolytic solution S2 is a positive electrode film-forming additive. The secondary battery is prepared through two electrolytic solution injections, the electrolytic solution S1 containing the negative electrode film-forming additive is injected through the first injection, and the electrolytic solution S2 containing the positive electrode film-forming additive is injected through the second injection.

The high-nickel ternary positive electrode material may cause a significant oxidative decomposition reaction of the conventional electrolytic solution during the application, which results in severe gas production during high temperature storage. In the present disclosure, the negative electrode film-forming additive is first added by injection and a good SEI is formed on the surface of graphite after the formation process, and subsequently, the positive electrode film-forming additive is added by another injection, and a fine cathode electrolyte interphase (CEI) is formed to inactivate surface active sites of the high-nickel material. In this way, the gas production problem is solved, while maintaining the high temperature performance and cycle performance of the high-nickel lithium ion battery.

As an improvement to the secondary battery of the present disclosure, the high-nickel ternary positive electrode material has a chemical formula of $LiNi_xCo_yMn_{1-x-y}O_2$. Generally, x in the high-nickel material is required to be greater than 0.5, and in the present disclosure, $0.6 \leq x \leq 0.9$, $0.05 \leq y \leq 0.2$, and $x+y < 1.0$. The high-nickel ternary positive electrode material of the present disclosure can greatly increase a specific capacity of the material, thereby improving the energy density of the secondary battery.

As an improvement to the secondary battery of the present disclosure, the electrolytic solution S1 accounts for 70% to 95% of a total volume of the electrolytic solution, and the electrolytic solution S2 accounts for 5% to 30% of the total volume of the electrolytic solution.

As an improvement to the secondary battery of the present disclosure, the positive electrode film-forming additive is at least one selected from dimethyl sulfite (DMS), and diethyl sulfite (DBS) or acrylonitrile (AAN)

As an improvement to the secondary battery of the present disclosure, the negative electrode film-forming additive is at least one selected from vinylene carbonate (VC). , ethylene sulfate (DTD), 4-methyl-2,2-dioxo-1,3,2-dioxathiolane, trifluoroethyl phosphate (TTFP), lithium 2-trifluoromethyl sulfonamide (LiTFSI) and lithium bisfluorosulfonimide (LiFSI).

As an improvement to the secondary battery of the present disclosure, the organic solvent is at least one selected from a carbonate compound, a carboxylate compound and an ether. Preferably, the carbonate compound is selected from ethylene carbonate, propylene carbonate, dimethyl carbonate, and ethyl methyl carbonate; the carboxylate compound is γ-butyrolactone; and the ether is selected from tetrahydrofuran or dimethoxymethane.

As an improvement to the secondary battery of the present disclosure, a mass percentage of the positive electrode film-forming additive is 0.1% to 10%, preferably 0.1% to 5% of a total mass of the solvent; and a mass percentage of the negative film-forming additive is 0.1% to 10%, preferably 0.1% to 5% of the total mass of the solvent. If the added amount is too small, it is not enough to form a complete protective film on the interface of the active material; if the added amount is too great, the viscosity of the electrolytic solution increases and the conductivity decreases, which affects the dynamic performance of the battery. In addition, the excess additive will lead to a continuous electrochemical reaction during the charging and discharging process when using the battery cell, thereby increasing the impedance and resulting in a deterioration of the capacity of the battery cell.

As an improvement to the secondary battery of the present disclosure, the electrolyte salt is lithium hexafluorophosphate ($LiPF_6$).

As an improvement to the secondary battery of the present disclosure, the negative electrode active material of the negative electrode plate is graphite.

The present disclosure also relates to a method for electrolytic solution injection of a secondary battery. The method adopts two injections, after performing a first injection, sealing and formation, a second injection is performed. The first injection is performed by using the electrolytic solution S1 of the present disclosure, and the second injection is performed by using the electrolytic solution S2 of the present disclosure.

The electrolytic solution S1 is first injected, after the formation is completed, an air bag is opened to inject the electrolytic solution S2, and then the capacity test is performed.

The preparation method of the lithium ion battery according to the embodiments of the present disclosure is described as follows.

The battery cell to be injected is obtained by adding stirring, coating, cold pressing, winding, encapsulation and baking to remove water. The positive electrode active material is shown in Table 1, and the negative electrode is graphite. 1mol/L $LiPF_6$, as the lithium salt, is added into the electrolytic solution, and ethylene carbonate (EC) and ethyl methyl carbonate (EMC) are used as the organic solvent. The electrolytic solution is injected through two injections. A negative electrode film-forming additive is added in the electrolytic solution S1 of the first injection, and the electrolytic solution S1 accounts for 90% of the total volume of the electrolytic solution. A positive electrode film-forming additive is added into the electrolytic solution S2 of the second injection, and the electrolytic solution S2 accounts for 10% of the total volume of the electrolytic solution. The contents are also shown in Table 1, in which the content of the additive is calculated as a mass percentage content based upon the total mass of the solvent. The S1 is first injected, after the sealing and formation, the air bag is opened to inject the electrolytic solution S2, followed by sealing, shaping, etc., so as to obtain a finished battery cell. The battery cell mode is 4060D0 (thickness: 4.0 mm, width: 60 mm, and length: 130 mm).

Table 1:

| No. | Positive Electrode Active Material | Electrolytic Solution | | | | |
|---|---|---|---|---|---|---|
| | | Lithium Salt | Organic Solvent | S1 Additive | S2 Additive | |
| | | | | DTD | PS | SN |
| Embodiment 1 | $LiNi_{0.6}Co_{0.2}Mn_{0.2}O_2$ | 1M $LiPF_6$ | EC:EMC=30:70 | 1.0% | 0.5% | - |
| Embodiment 2 | $LiNi_{0.6}Co_{0.2}Mn_{0.2}O_2$ | 1M $LiPF_6$ | EC:EMC=30:70 | 1.0% | - | 0.5% |
| Embodiment 3 | $LiNi_{0.6}Co_{0.2}Mn_{0.2}O_2$ | 1M $LiPF_6$ | EC:EMC=30:70 | 1.0% | 0.5% | 0.5% |
| Embodiment 4 | $LiNi_{0.8}Co_{0.1}Mn_{0.1}O_2$ | 1M $LiPF_6$ | EC:EMC=30:70 | 1.0% | 0.5% | 0.5% |
| Notes: "-" denotes that the substance is not added. | | | | | | |

The preparation method of lithium-ion batteries of Comparative Examples is:

The battery to be injected is obtained by stirring, coating, cold pressing, winding, encapsulation and baking to remove water, in which the positive electrode active material is shown in Table 2, the negative electrode is graphite, 1 mol/L $LiPF_6$, as a lithium salt, is added into the electrolytic solution, EC and EMC are used as the organic solvent, and the additives in the electrolytic solution are shown in Table 2. The electrolytic solution is injected through one injection, the battery cell is sealed and formed, then subjected to shaping and the like to obtain a finished battery cell. The battery cell mode is 4060D0 (thickness: 4.0 mm, width: 60 mm, length: 130 mm).

Table 2:

| No. | Positive Electrode Active Material | Lithium Salt | Organic Solvent | Additive | | |
|---|---|---|---|---|---|---|
| | | | | DTD | PS | SN |
| Comparative Example 1 | $LiNi_{1/3}Co_{1/3}Mn_{1/3}O_2$ | 1M $LiPF_6$ | EC:EMC=30:70 | 1.0% | 0.5% | 0.5% |
| Comparative Example 2 | $LiNi_{0.5}CO_{0.2}Mn_{0.3}O_2$ | 1M $LiPF_6$ | EC:EMC=30:70 | 1.0% | 0.5% | 0.5% |
| Comparative Example 3 | $LiNi_{0.6}Co_{0.2}Mn_{0.2}O_2$ | 1M $LiPF_6$ | EC:EMC=30:70 | 1.0% | 0.5% | - |
| Comparative Example 4 | $LiNi_{0.6}Co_{0.2}Mn_{0.2}O_2$ | 1M $LiPF_6$ | EC:EMC=30:70 | 1.0% | - | 0.5% |
| Comparative Example 5 | $LiNi_{0.6}Co_{0.2}Mn_{0.2}O_2$ | 1M $LiPF_6$ | EC:EMC=30:70 | 1.0% | 0.5% | 0.5% |
| Comparative Example 6 | $LiNi_{0.6}Co_{0.2}Mn_{0.2}O_2$ | 1M $LiPF_6$ | EC:EMC=30:70 | - | - | - |
| Comparative Example 7 | $LiNi_{0.6}Co_{0.2}Mn_{0.2}O_2$ | 1M $LiPF_6$ | EC:EMC=30:70 | 1.0% | - | - |
| Comparative Example 8 | $LiNi_{0.6}Co_{0.2}Mn_{0.2}O_2$ | 1M $LiPF_6$ | EC:EMC=30:70 | - | 0.5% | - |
| Comparative Example 9 | $LiNi_{0.6}Co_{0.2}Mn_{0.2}O_2$ | 1M $LiPF_6$ | EC:EMC=30:70 | - | - | 0.5% |
| Comparative Example 10 | $LiNi_{0.8}Co_{0.1}Mn_{0.1}O_2$ | 1M $LiPF_6$ | EC:EMC=30:70 | 1.0% | 0.5% | 0.5% |
| Notes: "-" denotes that the substance is not added. | | | | | | |

By performing the preparation method with two injections according to the embodiments of the present disclosure, lithium-ion batteries of the following comparative examples are prepared with a low-nickel positive electrode active material and the additives shown in Table 3.

Table 3:

| No. | Positive Electrode Active Material | Electrolytic Solution | | | | |
| --- | --- | --- | --- | --- | --- | --- |
| | | Lithium Salt | Organic Solvent | S1 Additive | S2 Additive | |
| | | | | DTD | PS | SN |
| Comparative Example 11 | $LiNi_{1/3}Co_{1/3}Mn_{1/3}O_2$ | 1M $LiPF_6$ | EC:EMC=30:70 | 1.0% | 0.5% | 0.5% |
| Comparative Example 12 | $LiNi_{0.5}Co_{0.2}Mn_{0.3}O_2$ | 1M $LiPF_6$ | EC:EMC=30:70 | 1.0% | 0.5% | 0.5% |

By performing the preparation method with two injections according to the embodiments of the present disclosure, using $LiNi_{0.6}Co_{0.2}Mn_{0.2}O_2$ as the positive electrode active material, lithium-ion batteries of the following comparative examples are prepared with the additives shown in Table 4.

Table 4:

| | Lithium Salt | Organic Solvent | S1 Additive | S2 Additive |
| --- | --- | --- | --- | --- |
| Comparative Example 13 | 1M $LiPF_6$ | EC:EMC=30:70 | - | PS 0.5%, SN0.5% |
| Comparative Example 14 | 1M $LiPF_6$ | EC:EMC=30:70 | PS 1.0% | DTD 0.5% |
| Comparative Example 15 | 1M $LiPF_6$ | EC:EMC=30:70 | SN 1.0% | DTD 0.5% |
| Comparative Example 16 | 1M $LiPF_6$ | EC:EMC=30:70 | - | PS 0.5%, SN0.5% DTD 1% |
| Notes: "-" denotes that the substance is not added. | | | | |

Test Methods:

(1) Lithium precipitation test

At 25°C, the battery was charged to 4.2 V with a constant current of 1C, and charged at a constant voltage of 4.2 V until the charging current was 0.05 C. Then, it was discharged to 2.8 V at a constant current of 1 C. The above procedure was one charging and discharging cycle. After performing 10 cycles, the battery was disassembled in a dry room to observe the lithium precipitation condition at the negative electrode interface.

(2) High temperature storage gas production test

At 25°C, the battery was charged to 4.2 V with a constant current of 1 C, and charged under a constant voltage of 4.2 V until the charging current was 0.05 C, i.e., 100% SOC. With 100% SOC, the battery was stored in an environment of 85°C, its volume was tested during the whole storage process, and the test frequency is every two days after heating for 0 day, 1 day, 2 days, and 4 days. The test was terminated in 30 days or once a volume expansion ratio was greater than 150%.

(3) Cycle performance test

At 25°C, the battery was charged to 4.2 V with a constant current of 1 C, and charged at a constant voltage of 4.2 V until the charging current was 0.05 C. Then, it was discharged to 2.8 V at a constant current of 1 C. The above procedure was one charging and discharging cycle. The battery was subjected to 500 charging and discharging cycles according to the procedure described above.

Capacity retention rate of the lithium battery after the $500^{th}$ cycle = (discharge capacity of the $500^{th}$ cycle / initial discharge capacity) × 100%

(4) Direct current resistance (DCR) test

At 25°C, the battery was charged to 4.2 V with a constant current of 1 C, and charged at a constant voltage of 4.2 V until the charging current was 0.05 C. Then, it was discharged at a constant current of 1 C for 30 min, i.e., 50% SOC; it was discharged with 4C for 30s at 25°C, discharged with 0.36C for 10s at -25°C, then its voltage value was measured. The direct current resistance was calculated by the following formula.

DCR (25°C) = (voltage before discharge - voltage at the last stage of pulse discharge) / (2Ah × 4C)

DCR (-25°C) = (voltage before discharge - voltage at the last stage of pulse discharge) / (2Ah × 0.36C)

The test results are shown in Table 5.

Table 5:

| No. | Li Precipitation Test | High Temperature Storage Gas Production Test | Cycle Performance Test | DCR (25°C) | DCR (-25°C) |
|---|---|---|---|---|---|
| Embodiment 1 | No | 21.5% | 92.0% | 40.2 | 352.1 |
| Embodiment 2 | No | 32.5% | 92.3% | 38.0 | 336.9 |
| Embodiment 3 | No | 19.8% | 92.1% | 41.8 | 366.2 |
| Embodiment 4 | No | 24.1% | 91.5% | 39.8 | 362.5 |
| Comparative Example 1 | No | 10.0% | 95.0% | 50.5 | 425.3 |
| Comparative Example 2 | No | 15.0% | 93.4% | 49.3 | 420.2 |
| Comparative Example 3 | Yes | 21.0% | 84.5% | 42.6 | 399.5 |
| Comparative Example 4 | Yes | 33.0% | 85.8% | 40.1 | 375.4 |
| Comparative Example 5 | Yes | 20.0% | 85.0% | 44.4 | 416.0 |
| Comparative Example 6 | Yes | 55.1% | 86.3% | 38.2 | 322.5 |
| Comparative Example 7 | No | 38.0% | 88.3% | 39.1 | 351.2 |
| Comparative Example 8 | Yes | 26.7% | 82.0% | 42.0 | 367.6 |
| Comparative Example 9 | Yes | 32.0% | 84.6% | 39.6 | 355.1 |

(continued)

| No. | Li Precipitation Test | High Temperature Storage Gas Production Test | Cycle Performance Test | DCR (25°C) | DCR (-25 °C) |
|---|---|---|---|---|---|
| Comparative Example 10 | Yes | 23.6% | 83.0% | 41.3 | 401.0 |
| Comparative Example 11 | No | 9.8% | 95.1% | 43.2 | 376.0 |
| Comparative Example 12 | No | 14.8% | 94.3% | 42.5 | 372.3 |
| Comparative Example 13 | Yes | 24.6% | 87.2% | 41.1 | 360.8 |
| Comparative Example 14 | Yes | 26.20% | 85.50% | 44.2 | 378.5 |
| Comparative Example 15 | Yes | 32.50% | 86.20% | 43.4 | 370.2 |
| Comparative Example 16 | Yes | 28.20% | 85.20% | 40.8 | 364.1 |

Result analysis:

From the comparison of Embodiments 1 to 3 with Comparative Examples 3 to 9, it can be seen that, in the $LiNi_{0.6}Co_{0.2}Mn_{0.2}O_2$ lithium-ion battery system, the absence of additives leads to severe problems of high-temperature storage gas generation and lithium precipitation. The introduction of the positive and negative electrode film-forming additives can effectively form films at the interface to inactivate the interface active sites, thereby effectively reducing high temperature gas production. The positive electrode film-forming additive inhibits the continuous reaction between the high-nickel material interface and the electrolytic solution and thus has significant effect on reducing the gas production. However, when the negative electrode interface is not under protection, the positive electrode film-forming additive may obviously increases the impedance of the negative electrode interface, which results in a deterioration of the cycle performance of the battery cell and the lithium precipitation. If the negative electrode film-forming additive is first added to form a fine SEI protective film on the negative electrode interface before introducing the positive electrode film-forming additive, the high-temperature storage gas production can be significantly reduced while taking room temperature cycling into consideration and lowering the risk of lithium precipitation, and the normal-temperature DCR and the low-temperature DCR are also significantly reduced when compared with adding the positive and negative electrode film-forming additives in one step.

From the comparison of Comparative Examples 1 and 2, Embodiment 3 and Comparative Examples 1, 2, 5, and 10, it can be seen that the high- and low-nickel ternary positive electrode materials reacts differently to the film-forming additives. For a batteries with the low-nickel ternary positive electrode materials ($LiNi_{1/3}Co_{1/3}Mn_{1/3}O_2$, $LiNi_{0.5}Co_{0.2}Mn_{0.3}O_2$), whether the positive electrode film-forming is introduced before or after the film formation of the negative electrode film-forming additive has no significant influence on the high temperature storage performance and dynamic performance. However, in the case that the various additives have the same improvement effect on the high-temperature storage of the batteries with the high-nickel ternary positive electrode materials ($LiNi_{0.8}Co_{0.1}Mn_{0.1}O_2$, $LiNi_{0.8}Co_{0.1}Mn_{0.1}O_2$), by introducing the positive electrode film-forming additive after the negative electrode interface is inactivated, the cycle performance of the batteries is improved, the lithium precipitation is alleviated and DCR is reduced at the same time.

From comparison of Comparative Example 13 with Embodiment 3, it can be seen that, without adding the negative electrode film-forming additive during the first injection process, it is impossible to form an effective SEI to protect the negative electrode interface, and thus the subsequently added positive electrode film-forming additive can still react on the negative electrode interface, leading to the lithium precipitation, an increase in the interface impedance, and the deterioration of cycle performance. By comparing Comparative Examples 14 and 15 and Embodiment 3, it can be seen that, when the positive electrode film-forming additive is added during the first injection and the negative electrode film-forming additive is added during the second injection, the positive electrode film-forming additive can directly react with the negative electrode interface and the interface impedance deteriorates. In this way, the lithium precipitation and cycle deterioration cannot be prevented even if the negative electrode film-forming additive is subsequently introduced. In a case that all the additives are added through the second injection, a good protective SEI cannot be formed on the negative electrode interface, thereby increasing the interface impedance, leading to a severe lithium precipitation and a rapid deterioration of the cycle performance.

In summary, in the present disclosure, on basis of the effects of the film-forming additives on the positive and negative electrodes of the battery, the SEI film is preferentially formed on the negative electrode to avoid the side reactions with the positive electrode film-forming additive and modify both positive and negative interfaces, thereby balancing high temperature performance and cycle performance of the high-nickel lithium ion battery.

Other embodiments:

By performing the preparation method with two injections according to the embodiments of the present disclosure, the lithium ion batteries were prepared by using $LiNi_{0.6}Co_{0.2}Mn_{0.2}O_2$ as the positive electrode material and the additives shown in Table 6.

Table 6:

|  | Lithium Salt | Organic Solvent | S1 Additive | S2 Additive |
|---|---|---|---|---|
| Embodiment 5 | 1M LiPF$_6$ | EC:EMC=30:70 | VC 1.0% | PS 0.5%, SN0.5% |
| Embodiment 6 | 1M LiPF$_6$ | EC:EMC=30:70 | LiTFSI 1.0% | PS 0.5%, ADN 0.5% |
| Embodiment 7 | 1M LiPF$_6$ | EC:EMC=30:70 | TTFP 1.0% | PS 0.5%, AAN 0.5% |
| Embodiment 8 | 1M LiPF$_6$ | EC:EMC=30:70 | VC 1.0% | ES1% |
| Embodiment 9 | 1M LiPF$_6$ | EC:EMC=30:70 | LiFSI 0.5%, VC 0.5% | ES 0.5%, AAN 0.5% |
| Embodiment 10 | 1M LiPF$_6$ | EC:EMC=30:70 | TTFP 1.0% | DMS 1% |
| Embodiment 10 | 1M LiPF$_6$ | EC:EMC:DMC=30: 50:20 | DTD 1.0% | DES 1.0% |

The performance of the secondary batteries prepared in these embodiments are similar to those of the above embodiments, which will not be repeated herein.

The above preferred embodiments are merely intended to describe the present disclosure, rather than limiting the scope of the claims. Any possible changes and modifications can be made by those skilled in the art without departing from the scope of the present disclosure. The protection scope of the present disclosure shall be defined by the scope of the claims of the present disclosure.

**Claims**

1. A method for electrolytic solution injection of a secondary battery, the secondary battery comprising a positive electrode plate, a negative electrode plate, a separator and an 5electrolytic solution, wherein,

   a positive electrode active material of the positive electrode plate comprises a high-nickel ternary positive electrode material, and
   the electrolytic solution comprises a solvent, an electrolyte salt and a film-forming additive, wherein the electrolytic solution is composed of an electrolytic solution S1 and an 10electrolytic solution S2,
   the method comprising:

   as a first injection, injecting the electrolytic solution S1 in the secondary battery, wherein a film-forming additive in the electrolytic solution S1 is a negative electrode film-forming additive for forming a solid electrolyte interphase film configured to isolate a material of the negative electrode from the electrolytic solution; performing sealing and formation; and
   as a second injection, injecting the electrolytic solution S2 in the secondary battery, wherein a film-forming additive in the electrolytic solution S2 is a positive electrode film-forming additive for forming a fine cathode electrolyte interphase film configured to inactivate surface active sites of the high-nickel ternary positive electrode material,
   wherein the negative electrode film-forming additive is selected from vinylene carbonate, ethylene sulfate, 4-methyl-2,2-dioxo-1,3,2-dioxathiolane, trifluoroethyl phosphate, lithium 2-trifluoromethyl sulfonamide, or lithium bisfluorosulfonimide; and
wherein the positive film-forming additive is selected from dimethyl sulfite, and diethyl sulfite, or acrylonitrile.

2. The method according to claim 1, wherein the high-nickel ternary positive electrode material has a chemical formula of $LiNi_xCo_yMn_{1-x-y}O_2$, wherein $0.6 \leq x \leq 0.9$, $0.05 \leq y \leq 0.2$, and $x+y<1.0$.

3. The method according to claim 1, wherein the organic solvent comprises at least one selected from a carbonate compound, a carboxylate compound and an ether;
preferably, the carbonate compound is at least one selected from ethylene carbonate, propylene carbonate, dimethyl carbonate and ethyl methyl carbonate, the carboxylate 5compound is $\gamma$-butyrolactone, and the ether is at least one selected from tetrahydrofuran and dimethoxymethane.

4. The method according to claim 1, wherein a mass percentage of the positive electrode film-forming additive is 0.1% to 10%, preferably 0.1% to 5% of a total mass of the solvent; and a mass percentage of the negative film-forming additive is 0.1% to 10%, preferably 0.1% to 5% of the total mass of the solvent.


**Patentansprüche**

1. Verfahren zur Injektion einer Elektrolytlösung einer Sekundärbatterie, wobei die Sekundärbatterie eine positive Elektrodenplatte, eine negative Elektrodenplatte, einen Separator und eine Elektrolytlösung umfasst, wobei

ein aktives Material für die positive Elektrode der positiven Elektrodenplatte ein ternäres Material für die positive Elektrode mit hohem Nickelgehalt umfasst, und
die Elektrolytlösung ein Lösungsmittel, ein Elektrolytsalz und ein filmbildendes Additiv umfasst, wobei die Elektrolytlösung aus einer Elektrolytlösung S1 und einer Elektrolytlösung S2 zusammengesetzt ist,
wobei das Verfahren Folgendes umfasst:

als eine erste Injektion, Injizieren der Elektrolytlösung S1 in die Sekundärbatterie, wobei ein filmbildendes Additiv in der Elektrolytlösung S1 ein Additiv zur Bildung eines negativen Elektrodenfilms zum Ausbilden eines Festelektrolyt-Zwischenphasenfilms ist, der konfiguriert ist, ein Material der negativen Elektrode von der Elektrolytlösung zu isolieren;
Durchführen einer Versiegelung und Ausbildung; und
als eine zweite Injektion, Injizieren der Elektrolytlösung S2 in die Sekundärbatterie, wobei ein filmbildendes Additiv in der Elektrolytlösung S2 ein Additiv zur Bildung eines positiven Elektrodenfilms zum Ausbilden eines feinen Kathodenelektrolyt-Zwischenphasenfilms ist, der konfiguriert ist, oberflächenaktive Stellen des ternären positiven Elektrodenmaterials mit hohem Nickelgehalt zu inaktivieren,
wobei das Additiv zur Bildung des negativen Elektrodenfilms ausgewählt wird aus Vinylencarbonat, Ethylensulfat, 4-Methyl-2,2-dioxo-1,3,2-dioxathiolan, Trifluorethylphosphat, Lithium-2-trifluormethylsulfonamid oder Lithiumbisfluorsulfonimid; und
wobei das Additiv zur Bildung eines positiven Films ausgewählt wird aus Dimethylsulfit und Diethylsulfit oder Acrylnitril.

2. Verfahren nach Anspruch 1, wobei das ternäre Material für die positive Elektrode mit hohem Nickelgehalt eine chemische Formel $LiNi_xCo_yMn_{1-x-y}O_2$ aufweist, wobei $0,6 \leq x \leq 0,9$, $0,05 \leq y \leq 0,2$ und $x + y < 1,0$.

3. Verfahren nach Anspruch 1, wobei das organische Lösungsmittel zumindest eines umfasst, das ausgewählt wird aus einer Carbonatverbindung, einer Carboxylatverbindung und einem Ether;
wobei, vorzugsweise, die Carbonatverbindung zumindest eine ist, die ausgewählt wird aus Ethylencarbonat, Propylencarbonat, Dimethylcarbonat und Ethylmethylcarbonat, die Carboxylatverbindung $\gamma$-Butyrolacton ist und der Ether zumindest einer ist, der ausgewählt wird aus Tetrahydrofuran und Dimethoxymethan.

4. Verfahren nach Anspruch 1, wobei ein Massenanteil des Materials zur Bildung des positiven Elektrodenfilms 0,1 % bis 10 %, vorzugsweise 0,1 % bis 5 % einer Gesamtmasse des Lösungsmittels beträgt; und ein Massenanteil des Additivs zur Bildung des negativen Films 0,1 % bis 10 %, vorzugsweise 0,1 % bis 5 %, der Gesamtmasse des Lösungsmittels beträgt.

**Revendications**

1. Procédé d'injection de solution électrolytique d'une batterie secondaire, la batterie secondaire comprenant une plaque d'électrode positive, une plaque d'électrode négative, un séparateur et une solution électrolytique, dans lequel

   un matériau actif d'électrode positive de la plaque d'électrode positive comprend un matériau d'électrode positive ternaire fortement dosé en nickel, et
   la solution électrolytique comprend un solvant, un sel d'électrolyte et un additif formant un film, la solution électrolytique étant composée d'une solution électrolytique S1 et d'une solution électrolytique S2,
   le procédé comprenant :

   en tant que première injection, l'injection de la solution électrolytique S1 dans la batterie secondaire, un additif formant un film dans la solution électrolytique S1 étant un additif formant un film d'électrode négative afin de former un film d'interphase électrolytique solide configuré pour isoler un matériau de l'électrode négative de la solution électrolytique ;
   la réalisation d'un scellement et d'un formage ; et
   en tant que seconde injection, l'injection de la solution électrolytique S2 dans la batterie secondaire, un additif formant un film dans la solution électrolytique S2 étant un additif formant un film d'électrode positive afin de former un film d'interphase électrolytique à cathode fine configuré pour désactiver des emplacements actifs en surface du matériau d'électrode positive ternaire à forte teneur en nickel,
   l'additif formant un film d'électrode négative étant sélectionné parmi le carbonate de vinylène, le sulfate d'éthylène, le 4-méthyle-2,2-dioxo-1,3,2-dioxathiolane, le trifluoroéthyle phosphate, le lithium 2-trifluorométhyle sulfonamide, ou le lithium bisfluorosulfonimide ; et
   l'additif formant un film d'électrode positive étant sélectionné parmi le diméthyle sulfite, et le diéthyle sulfite, ou l'acrylonitrile.

2. Procédé selon la revendication 1, dans lequel le matériau d'électrode positive ternaire à forte teneur en nickel a une formule chimique de $LiNi_xCo_yMn_{i-x-y}O_2$, sachant que $0,6 \leq x \leq 0,9$, $0,05 \leq y \leq 0,2$, et $x+y < 1,0$.

3. Procédé selon la revendication 1, dans lequel le solvant organique comprend au moins un solvant sélectionné parmi un composé de carbonate, un composé de carboxyle et un éther ;
   le composé de carbonate est de préférence au moins un composé sélectionné parmi l'éthylène carbonate, le propylène carbonate, le diméthyle carbonate et l'éthyle méthyle carbonate, le composé de carbonate étant du $\gamma$-butyrolactone, et l'éther étant au moins un éther sélectionné parmi le tétrahydrofurane et le diméthoxyméthane.

4. Procédé selon la revendication 1, dans lequel pourcentage en masse de l'additif formant un film d'électrode représente 0,1 % à 10 %, de préférence 0,1 % à 5 % d'une masse totale du solvant, et un pourcentage en masse de l'additif formant un film négatif représente 0,1 % à 10 %, de préférence 0,1 % à 5 % de la masse totale du solvant.